# EUROPÄISCHE PATENTANMELDUNG

(11) **EP 1 337 099 A2**
(43) Veröffentlichungstag der Anmeldung: **20.08.2003**
(21) Anmeldenummer: 03100268.6
(22) Anmeldetag: 10.02.2003
(51) Int. Cl.: H04M 3/523, H04M 3/53

(54) **Anrufverteilung in einer Anrufzentrale**

(30) Priorität: 19.02.2002 DE 10206898
(71) Anmelder: SIEMENS AKTIENGESELLSCHAFT, 80333 München (DE)
(72) Erfinder: Bock, Richard, 80337, München (DE)

(57) **Zusammenfassung**

Verfahren zur Verteilung von Call's in einem Callcenter und eine Vorrichtung zur Erweiterung eines Callcenter's.

Die Erfindung betrifft ein Verfahren zur Verteilung von Call's (= Anrufen) in einem Callcenter und eine Vorrichtung zur Erweiterung eines Callcenter's. Beim Vorliegen von Multimedianachrichten werden in einer Erweiterungseinheit virtuelle Call's erzeugt. Diese virtuellen Call's werden in einem konventionellen Callcenter gleichsam den normalen Call's an Agentenplätze verteilt. Den Agentenplätzen wird somit die Information über das Vorliegen von Multimedianachrichten übermittelt.

## Beschreibung

Die Erfindung betrifft ein Verfahren zur Verteilung von Call's (= Anrufen) in einem Callcenter, bestehend aus einer Telekommunikationsanlage, die ausgestattet ist mit ACD-Funktion (ACD = automatic call distribution = automatische Anrufverteilung), die eingehende Call's nach vorgegebenen Kriterien an eine Vielzahl von Agentenplätze verteilt und bei Bedarf in eine Warteschlange für die ausgewählten Agentenplätze eingereiht werden, wobei zu den Agentenplätzen Informationen bezüglich der Call's übertragen werden.

Des weiteren betrifft die Erfindung eine Vorrichtung zur Erweiterung eines Callcenter's mit einer Telekommunikationsanlage, welche eine ACD-Funktion aufweist, mit Anbindung der Telekommunikationsanlage an ein öffentliches Telefonnetz und Verbindung zu einer Vielzahl von Agentenplätzen.

Callcenter sind als Dienstleistungseinrichtungen für Telekommunikationsaufgaben allgemein bekannt. Hierzu wird auf das "Lexikon der Datenkommunikation", Klaus Lipinski, ISBN 3-8266-4089-6 verwiesen. Viele Unternehmen und Institutionen wie Banken, Versicherungen und Versandhäuser bedienen sich eines Callcenter's, um zum Beispiel anrufenden Kunden schnell und effektiv verschiedene Dienstleistungen wie Beratung und Verkauf anzubieten. Ein solches Callcenter besteht aus einer Telekommunikationsanlage, die mit Anrufverteilungsfunktionen ausgestattet ist, wobei die Telekommunikationsanlage an ein öffentliches Netz angebunden ist und Verbindungen zu Agentenplätzen aufweist. An den Agentenplätzen nehmen die sogenannten Callcenteragenten oder kurz Agenten die eingehenden Call's entgegen.

Um Telefonanrufe automatisch verteilen zu können, sind Callcenter mit verschiedenen Funktionen wie ACD (= automatic call distribution = automatische Anrufverteilung) und EAS (= expert agent selection = Sachbearbeiter Auswahl) ausgestattet. Modernere Callcenter verfügen über eine integrierte Spracherkennung IVR (= integrated voice recognition), bei der ein Anrufer, unterstützt durch ein sprachgeführtes Menü der Telekommunikationsanlage, mit einem oder mehreren Sprachbefehlen die Menüauswahl trifft.

Bei der ACD-Funktion wird bei eingehenden Call's (= Anrufen) die Anrufnummer analysiert und nach verschiedenen Kriterien, zum Beispiel nach der Vorwahlnummer des Anrufes, entweder an einen bestimmten (EAS-Funktion) Callcenteragenten oder zum nächsten freien Agenten verteilt. Bei Bedarf können die Anrufe in einer Warteschleife gepuffert werden. ACD-Systeme bieten die Möglichkeit der statistischen Auswertung von Gesprächsparametern wie Anrufdauer und/oder Anrufhäufigkeit. Man unterscheidet bezüglich der ACD-Funktion zwischen adaptierten Systemen, bei denen die ACD-Funktion neben einer Telekommunikationsanlage ausgeführt wird, und integrierten Systemen, bei denen die Telekommunikationsanlage um die ACD-Funktion erweitert ist.

Der Vorteil von Callcentern besteht darin, dass Telefonanrufe schnell und gezielt verteilt werden und der Anrufer ohne lange Wartezeit, da ein manuelles telefonisches Weiterverbinden entfällt, an den gewünschten Agenten und somit an die gewünschte Information kommt. Diese oben genannten konventionellen Callcenter sind auf die Verteilung von Telefonanrufen begrenzt. Gehen jedoch an die Adresse des konventionellen Callcenter's neben Telefonanrufen auch Multimedianachrichten, wie zum Beispiel E-Mails (= electronic mail = elektronische Post), ein, so können diese Multimedianachrichten nicht über das konventionelle Callcenter an die Agentenplätze verteilt werden. Wegen der vielen Vorteile, wie Kundenzufriedenheit durch geringe Wartezeiten und Effektivität, sind konventionelle Callcenter weit verbreitet und werden als Dienstleistungseinrichtungen zur Anrufverteilung betrieben.

Auch Multimedia-Callcenter zur Verteilung von Multimedianachrichten sind allgemein bekannt. Ausgestattet mit Funktionen wie die des oben genannten konventionellen Callcenter's, können Multimedia-Callcenter zusätzlich zum normalen Telefonanruf weitere Multimedianachrichten, wie zum Beispiel SMS (short message service = Kurzmitteilungsservice), E-Mail(= electronic mail = elektronische Post), FTP (= file transfer protocol = Datentransferprotokoll )und voice mail (Sprachpost) an Agentenplätze verteilen. In einer Pressemitteilung der Siemens AG vom 20.07.2000 mit der Informationsnummer ICN 2000 07 113 d wird ein spezielles Multimedia-Callcenter beschrieben, bei dem verschiedene Applikationen wie automatische Anrufverteilung und Multimedia-Anwendungen bereits auf einer standardbasierten PC-Plattform integriert sind.

Bisher bestand für den Betreiber eines konventionellen Callcenter's nur die Möglichkeit das konventionelle Callcenter durch ein neu gekauftes Multimedia-Callcenter zu ersetzen, um Multimedianachrichten neben normalen Anrufen zu verteilen. Der in hohem Maße wachsende Multimedia-Datenaustausch und Multimedia-Informationsaustausch, wobei das Medium Telefon zunehmend durch Multimedia wie SMS, E-Mail, FTP und voice mail ergänzt und zum Teil sogar ersetzt wird, macht es für Betreiber von konventionellen Callcentern wünschenswert, ohne eine hohe Investition in ein neues Multimedia-Callcenter zu tätigen, sowohl Telefonanrufe als auch Multimedianachrichten schnell und effektiv an die Sachbearbeiter zu verteilen.

Es ist daher Aufgabe der Erfindung, eine kostengünstige, technische Möglichkeit zu finden, ein bestehendes konventionelles Callcenter so aufzurüsten, dass dieses konventionelle Callcenter, wie ein Multimedia-Callcenter, in der Lage ist Telefonanrufe und Multimedianachrichten an Agentenplätze zu verteilen.

Diese Aufgabe wird durch die Merkmale der unabhängigen Patentansprüche gelöst. Vorteilhafte Weiterbildungen der Erfindung sind Gegenstand untergeordneter Patentansprüche.

Der Erfinder hat erkannt, dass durch die Generierung und Verteilung von virtuellen Call's, das Vorliegen von Multimedianachrichten, die an eine bestimmte Adresse gerichtet sind, signalisiert werden kann. Diese virtuellen Call's, wobei ein virtueller Call ein künstlich erzeugter Anruf ohne dazugehörigen Anrufer ist, werden in einem konventionelle Callcenter, bestehend aus einer Telekommunikationsanlage mit ACD-Funktion, genauso wie die normalen Call's behandelt. Mit der Telekommunikationsanlage können nun virtuelle Call's und normale Call's an eine Vielzahl von Agentenplätzen verteilt werden und somit den Callcenteragenten das Vorliegen von Multimedianachrichten signalisieren.

Entsprechend dem allgemeinen Erfindungsgedanken schlägt der Erfinder vor, das bestehende Verfahren zur Verteilung von Call's (= Anrufen) in einem konventionellen Callcenter mit einer Telekommunikationsanlage mit ACD-Funktion (ACD = automatic call distribution = automatische Anrufverteilung), die alle eingehenden Call's nach vorgegebenen Kriterien an eine Vielzahl von Agentenplätzen verteilt und bei Bedarf in eine Warteschlange für die ausgewählten Agentenplätze eingereiht werden, wobei den Agentenplätzen Informationen bezüglich der Call's übertragen werden, dahingehend zu verbessern, dass für jede an das konventionelle Callcenter gerichtete Multimedianachricht durch eine Erweiterungseinheit ein virtueller Call, also ein Call ohne Anrufer, generiert wird und dieser die Telekommunikationsanlage anspricht. Hierdurch wird erreicht, dass die virtuellen Call's und die normalen Call's durch das konventionelle Callcenter entweder an gezielt ausgewählte oder an freie Agentenplätze verteilt werden. Dem gezielt angewählten oder freien Callcenteragenten wird somit das Vorliegen von Multimedianachrichten und eingehende Anrufe signalisiert.

Es ist besonders vorteilhaft, wenn die virtuellen Call's Informationen enthalten, die einen gezielten Zugriff von Agentenplätzen auf die Multimedianachrichten erlauben. Hierdurch wird ein schneller Zugriff auf die Multimedianachrichten ermöglicht. Als eine besonders einfache Übertragungsart für die Zugriffsinformationen bietet es sich bei virtuellen Call's an, die Informationen analog der A-Rufnummer von normalen Call's, die zum Beispiel bei ISDN (integrated services digital network = Dienste-integrierendes digitales Netzwerk) die Telefonnummer des Anrufers anzeigt, zu übertragen.

Werden mit den virtuellen Call's Informationen zum Speicherort der Multimedianachrichten übermittelt, so ist es besonders einfach, in sehr großen Netzwerken, zum Beispiel dem Internet oder auch bei großen Firmennetzwerken, die einzelne Multimedianachricht zu finden. Eine Information zum Speicherort kann die Server-IP-Adresse (IP = internet protocol) sein.

Es kann aber auch vorteilhaft sein, Multimedianachrichten zum Beispiel nach Mediatyp geordnet auf bestimmten Servern zu hinterlegen. An den Agentenplätzen sind diese Server-IP-Adressen vorkonfiguriert. Gehen nun virtuelle Call's an den Agentenplätzen ein, so werden die Multimedianachrichten nur auf den vorkonfigurierten Servern beziehungsweise dessen Server-IP-Adressen gesucht.

Ein weiterer Vorteil ist es, wenn der virtuelle Call eine ID (= identification = Identifizierung) enthält, die eine eindeutige Identifizierung der Multimedianachricht auf einem Server erlaubt. Somit ist ein besonders schneller Zugriff auf eine spezielle Nachricht möglich, vor allem wenn sich sehr viele Nachrichten auf dem selben Server befinden.

Werden Informationen zum Mediatyp der in der Multimedianachricht enthaltenen Daten und/oder der Mediatyp der Multimedianachricht selbst dem virtuellen Call beigefügt, so kann der Callcenteragent schon vor dem Abholen der Nachricht und der darin enthaltenen Daten die richtigen Applikationen, zum Beispiel SMS-Client oder E-Mail-Client, starten.

Es ist außerdem vorteilhaft, wenn auch als Information die Absenderadresse, zum Beispiel dessen Server-IP-Adresse, oder eine andere elektronische Adresse, zum Beispiel dessen Absender-E-Mail-Adresse, übertragen wird. So besteht hierdurch eine Möglichkeit für den Callcenteragenten vorrangig, zum Beispiel nach Callcenter internen Prioritäten, die vorher den Absendern vom Callcenter zugeordnet wurden, Multimedianachrichten gegenüber dem chronologischen Eingang der Multimedianachrichten abzurufen.

Für den Callcenteragent ist es auch günstig, wenn ein virtueller Call ein Unterscheidungsmerkmal zum konventionellen Call aufweist, wobei das Unterscheidungsmerkmal auch einfach in der A-Rufnummer enthalten sein kann. Er kann hierdurch schnell erkennen, ob ein persönlicher Kundentelefonkontakt oder nur eine Nachricht eines Kunden vorliegt.

Sehr oft werden besonders kurze, meist nur aus Text bestehende, Multimedianachrichten zum Beispiel SMS (= short message service = Kurzmitteilungsservice) übermittelt. Da hier die übertragene Datenmenge sehr gering ist, kann eine direkte Übertragung der Nachricht durch den virtuellen Call selbst erfolgen.

Werden Multimedianachrichten auf einem zum Callcenter gehörenden Speicher, zum Beispiel ein spezieller Server des Callcenter's, hinterlegt, so kann der Suchvorgang der Agenten nach Multimedianachrichten minimiert werden. Es kann aber auch vorteilhaft sein, die Nachrichten auf nicht zum Callcenter gehörende Speicher zu hinterlegen. Hierdurch ergibt sich die Möglichkeit, bei Eingang von vielen sehr speicherintensiven Multimedianachrichten die Datenflut zu verringern und dadurch einen möglichen Datenstau zu verhindern.

Liegen die Multimedianachrichten auf vielen verschiedenen Servern, so ist es besonders komfortabel, wenn beim Eingang neuer Multimedianachrichten jeder Server eine Benachrichtigung über das Vorliegen neuer Nachrichten an das Callcenter sendet. Eine aufwendige Abfrageroutine des Callcenter's auf allen Servern wird hierdurch vermieden. Aber auch die regelmäßige Abfrage des Callcenter's bezüglich des Vorliegens von an das Callcenter gerichteten Multimedianachrichten kann vorteilhaft sein. Eine automatische Abfrageroutine kann zum Beispiel an die Auslastung des Callcenter's angepasst werden. Sind zum Beispiel alle Callcenteragenten mit der Bearbeitung von Call's und Multimedianachrichten beschäftigt und ist die Warteschleife voll, so wird erst bei frei werdender Warteschleife nach neuen Multimedianachrichten abgefragt.

Es kann auch sehr vorteilhaft sein, bei Eingang eines virtuellen Call's an einen Agentenplatz die zugeordnete Multimedianachricht automatisch abzuholen. Hierdurch können lange Wartezeiten des Callcenteragenten verhindert werden, da während dem Bearbeiten einer Multimedianachricht bereits die nächste Nachricht automatisch übertragen werden kann. Aber auch das Abholen der Multimedianachricht auf individuelle Anweisung, zum Beispiel durch Anklicken des virtuellen Call's am Agentenplatz, bietet dem Callcenteragenten die Möglichkeit, nach verschiedenen Kriterien die Multimedianachrichten abzuholen und somit die Bearbeitung der Nachrichten nicht chronologisch nach Eingang der Nachrichten, sondern nach anderen Gesichtspunkten zu gestalten.

Zusätzlich zum oben genannten Verfahren zur Verteilung von Call's in einem Callcenter, schlägt der Erfinder auch eine Erweiterungseinheit für ein konventionelles Callcenter vor, wobei die Erweiterungseinheit mindestens eine Anbindung an mindestens einen Datennetzverbund, mindestens eine Telefonverbindung zur Telekommunikationsanlage hat und mit Mitteln zum Erzeugen von virtuellen Call's, dies sind künstlich erzeugte Anrufe ohne dazugehöriger Anrufer, ausgestattet ist.

Die Erweiterungseinheit für ein konventionelles Callcenter kann vorzugsweise ein spezieller Server mit eigener IP-Adresse sein.

In einer vorteilhaften Ausführung der Erfindung ist als Datennetzverbund das Internet mit seinen Mitteln des Datenaustausches und den zur Verfügung stehenden Datenbanken vorgesehen.

Ist die Telefonverbindung der Erweiterungseinheit zur Telekommunikationsanlage eine externe Telefonverbindung, so kann die Erweiterungseinheit über das öffentliche Telefonnetz die Telekommunikationsanlage des Callcenter's ansprechen. Es kann aber auch sinnvoll sein, eine interne Telefonverbindung zur Telekommunikationsanlage vorzusehen.

Besonders vorteilhaft ist es, wenn die Agentenplätze des Callcenter's eine Verbindung zum Internet besitzen und somit die Möglichkeit haben, Daten zu versenden und auf Datenbanken zuzugreifen.

Es ist außerdem besonders vorteilhaft, wenn die beschriebene Erweiterungseinheit eines konventionelles Callcenter mit Mitteln, vorzugsweise Programm-Mittel oder Programm-Module, ausgestattet ist, die eine Durchführung des oben beschriebenen Verfahrens, bei dem Multimedianachrichten neben konventionellen Telefonanrufen im konventionellen Callcenter verteilt werden, ermöglichen.

Zusätzliche Merkmale und Vorteile der Erfindung ergeben sich aus der nachfolgenden Beschreibung bevorzugter Ausführungsbeispiele unter Bezugnahme auf die Zeichnungen.

Die Erfindung soll nachfolgend anhand der Zeichnungen näher erläutert werden. Es stellen dar:
- Figur 1:: Vorrichtung, die ein Callcenter mit erfindungsgemäßer Erweiterungseinheit zeigt;
- Figur 2:: Weitere Variante einer Vorrichtung, die ein Callcenter mit erfindungsgemäßer Erweiterungseinheit zeigt.

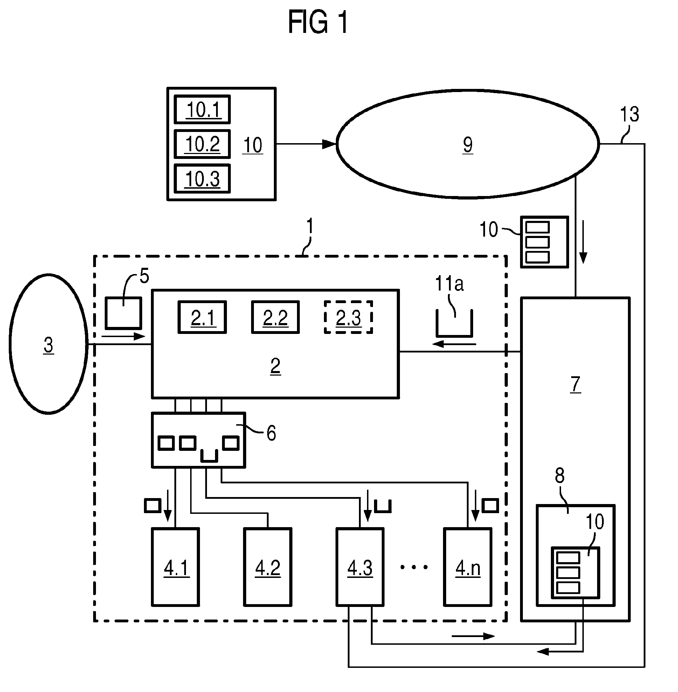

Die Figur 1 zeigt eine erfindungsgemäße Erweiterungseinheit 7 für ein Callcenter 1 mit angeschlossener Peripherie. Dieses Callcenter 1 ist mit einer Telekommunikationsanlage 2 ausgestattet, die über eine ACD-Funktion 2.1 verfügt, wobei in dieser dargestellten Ausführung die Telekommunikationsanlage 2 auch eine EAS-Funktion 2.2 aufweist. Die Telekommunikationsanlage 2 ist mit einem öffentlichen Telefonnetz 3 und einer Vielzahl von Agentenplätzen 4.1 - 4.n verbunden, wobei hier nur ein Agentenplatz 4.3 mit Zugang zum Internet 9 und multimediafähig ausgestattet ist.

Sind aus dem öffentlichen Telefonnetz 3 mehrere Call's 5 an die Telekommunikationsanlagen 2 gerichtet, so werden die Call's 5 entweder automatisch verteilt oder jeder Anrufer kann auf Wunsch, durch zum Beispiel einen Wählstring (Zeichenkette), der mit einem Tastendruck am Telefon des Anrufers erzeugt und durch die EAS-Funktion unterstützt wird, einen Callcenteragenten einer bestimmten Abteilung, zum Beispiel Verkauf, Entwicklung oder Marketing, erreichen. Sind alle Callcenteragenten besetzt, so werden die weiteren Anrufer in eine Warteschleife 6 eingereiht und sobald ein Agent frei ist, an diesen oder an einen Agenten einer bestimmten Abteilung weitervermittelt.

In der in Figur 1 gezeigten Ausführung, wird dieses konventionelle Callcenter 1 durch eine Erweiterungseinheit 7, die hier ein spezieller Server mit Zugang zum Internet 9 ist, ergänzt. Gehen nun zusätzlich zu den Call's 5 auch Multimedianachrichten an die Adresse des Callcenter's ein, so werden die Multimedianachrichten an die Erweiterungseinheit 7 geschickt. Wie in Figur 1 dargestellt, wird eine Multimedianachricht hier eine E-Mail 10, die als Anhang Bilddaten 10.2 und Sounddaten 10.3 enthält, über das Internet 9 an den Server 7, der hier die Erweiterungseinheit 7 bildet, beziehungsweise an die elektronische Serveradresse, geschickt. Die E-Mail 10 mit den angehängten Dateien wird auf dem Speicher 8 des Servers 7 gespeichert.

Ein spezielles Programm-Modul des Servers 7 analysiert alle eingehenden Multimedianachrichten, hier die eingehende E-Mail 10, bezüglich vorliegendem Nachrichtentyp, Absenderadresse, Mediatyp der angehängten Dateien und hinterlegt diese Informationen der Multimedianachrichten als Zugriffsinformationen. Außerdem erzeugt das obige Programm-Modul für jede eingehende Multimedianachricht einen virtuellen Call, der die zuvor genannten Zugriffsinformationen auf diese Multimedianachricht enthält und sendet jeden virtuellen Call an die Telekommunikationsanlage 2. Der in dieser Ausführung für die eingehende E-Mail 10 erzeugte virtuelle Call 11a wird vom Programm-Modul über die Telefonverbindung zur Telekommunikationsanlage 2 vermittelt. In der Telekommunikationsanlage 2 werden virtuelle Call's gleichsam den normalen Call's 5 an die Agentenplätze 4.1 - 4.n verteilt. Bei Bedarf können virtuelle Call's und normale Call's auch in einer Warteschleife 6 gepuffert werden. In diesem Ausführungsbeispiel ist der virtuelle Call 11a mit einem Wählstring (= Zeichenkette) versehen, wodurch der virtuelle Call 11a, unterstützt durch die EAS-Funktion 2.2 der Telekommunikationsanlage 2, nur zum einzigen multimediafähig ausgerüsteten Agentenplatz 4.3 zugeteilt wird.

Nachdem der virtuelle Call 11a die Warteschlange 6 durchlaufen hat, wird er am Agentenplatz 4.3 präsentiert. Durch den virtuellen Call 11a wird dem Callcenteragenten des Agentenplatzes 4.3 das Vorliegen einer Multimedianachricht angezeigt. Der Callcenteragent bekommt durch die im virtuellen Call enthaltenen Zugriffsinformationen, die zum Beispiel analog der Anrufnummer eines Call's ablesbar sein oder durch Anklicken des virtuellen Call's geöffnet werden können, Informationen zur Multimedianachricht. In der in Figur 1 dargestellten E-Mail 10 enthalten die Zugriffsinformationen den E-Mail-Header 10.1, den Speicherort der E-Mail 10 und Informationen zu den angehängten Dateien 10.2 und 10.3.
Es besteht nun die Möglichkeit nach der Präsentation des virtuellen Call's am Agentenplatz, die Multimedianachrichten direkt zum Agentenplatz zu übertragen oder erst auf Befehl des Callcenteragenten die Übertragung der Multimedianachrichten zu aktivieren. Wie in Figur 1 dargestellt, wird die E-Mail 10 mit angehängten Dateien 10.2 und 10.3 erst durch den Befehl des Callcenteragenten auf den Agentenplatz 4.3 übertragen. Am multimediafähig ausgestatteten Agentenplatz 4.3 kann mittels verschiedener Anwendungsprogramme, wie zum Beispiel E-Mail-Client, die E-Mail 10 mit Anhang 10.2 und 10.3 geöffnet und gegebenenfalls bearbeitet werden. Da der Agentenplatz 4.3 über einen Zugang 13 zum Internet 9 verfügt, besteht für den Callcenteragenten, nach Bearbeitung der zugeteilten E-Mail 10, die Möglichkeit dem Absender über das Internet direkt eine E-Mail zurückzusenden.

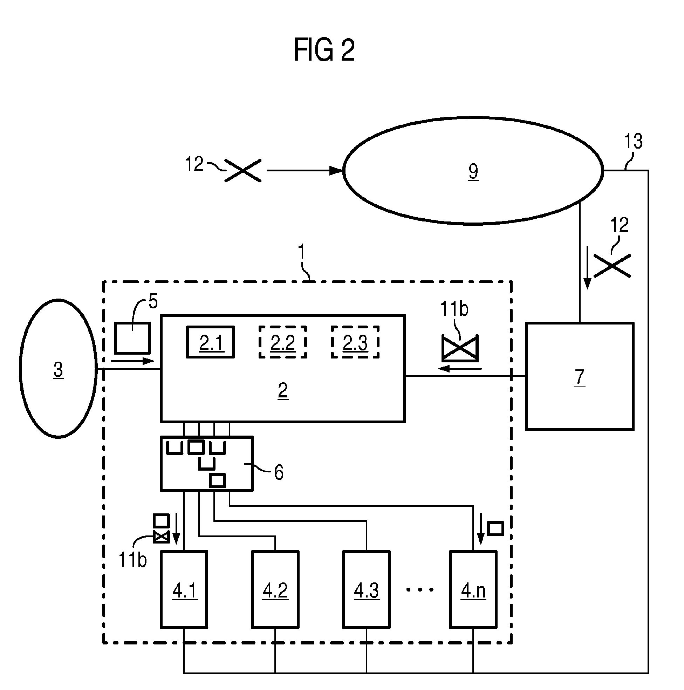

In Figur 2 wird eine weitere vorteilhafte Variante einer erfindungsgemäßer Erweiterungseinheit für ein Callcenter gezeigt, die eine Verteilung von Multimedianachrichten 12 und normalen Call's 5 ermöglicht. Die Verteilung von normalen Call's 5 wird wie in Figur 1 beschrieben, durch ein konventionelles Callcenter 1 ausgeführt, wobei im Gegensatz zu Figur 1 alle Agentenplätze multimediafähig und mit Zugang 13 zum Internet 9 ausgestattet sind.

Um mit dieser Vorrichtung Multimedianachrichten verteilen zu können, ist auch hier eine Erweiterungseinheit 7 mit Zugang zum Internet 9 und Telefonverbindung zur Telekommunikationsanlage 2 vorgesehen. Analog zu Figur 1 werden an das Callcenter 1 gerichtet Multimedianachrichten an die Erweiterungseinheit 7 gesendet und von dieser analysiert. Für jede an das Callcenter 1 gerichtete Multimedianachricht wird durch die Erweiterungseinheit 7 ein virtueller Call erzeugt, der an die Telekommunikationsanlage 2 gesendet wird. Wie in Figur 2 gezeigt, wird eine über das Internet 9 an das Callcenter gesendete SMS ( = short message service = Kurzmitteilungsservice) 12 an die Erweiterungseinheit 7 gesendet. Nachdem die Erweiterungseinheit 7 die eingehende SMS 12 erhalten und analysiert hat, erzeugt die Erweiterungseinheit 7 einen virtuellen Call 11b. In dieser besonderen Ausführung der Erfindung enthält der virtuelle Call 11b die gesamte SMS 12.

Der virtuelle Call 11b wird über eine Telefonleitung an die Telekommunikationsanlage 2 vermittelt. Wie auch in Figur 1 beschrieben, werden in der Telekommunikationsanlage 2 die virtuellen Call's gleichsam den normalen Call's 5 an Agentenplätze 4.1 - 4.n verteilt. Bei Bedarf können die virtuellen Call's und die normalen Call's auch in einer Warteschleife 6 gepuffert werden. Im vorliegenden Beispiel wird der virtuelle Call 11b dem Agentenplatz 4.1 zugeteilt und dort präsentiert. Beim Eingang des virtuellen Call's am Agentenplatz 4.1 wird automatisch erkannt, dass der virtuelle Call eine Multimedianachricht enthält. Am Agentenplatz 4.1 öffnet sich eine SMS-Applikation, die den Inhalt der SMS 12 für den Callcenteragenten anzeigt.

Durch die erfindungsgemäße Generierung von virtuellen Call's mittels eine Erweiterungseinheit und deren Verteilung in einem konventionellen Callcenter, wird dieses in Lage versetzt, neben Call's auch Multimedianachrichten zu Agentenplätzen zu verteilen.

Es versteht sich, daß die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

## Patentansprüche

1. Verfahren zur Verteilung von Call's (5) (= Anrufen) in einem Callcenter (1) mit einer Telekommunikationsanlage (2) mit ACD-Funktion (2.1) (ACD = automatic call distribution = automatische Anrufverteilung), wobei eingehende Call's (5) nach vorgegebenen Kriterien an eine Vielzahl von Agentenplätze (4.1 - 4.n) verteilt und bei Bedarf in eine Warteschleife (6) für die ausgewählten Agentenplätze (4.1 - 4.n) eingereiht werden, wobei den Agentenplätzen (4.1 - 4.n) Informationen bezüglich der Call's (5) übertragen werden,
**dadurch gekennzeichnet,**
**dass** für jede an das Callcenter (1) gerichtete Multimedianachricht (10,12) ein virtueller Call (11a,11b) generiert wird, um die Telekommunikationsanlage (2) anzusprechen.

2. Verfahren gemäß dem voranstehenden Patentanspruch 1,
**dadurch gekennzeichnet,**
**dass** die virtuellen Call's (11a,11b) Zugriffsinformationen enthalten, die einen gezielten Zugriff von den Agentenplätzen (4.1 - 4.n) auf die Multimedianachrichten (10,12) erlauben.

3. Verfahren gemäß dem voranstehenden Patentanspruch 2,
**dadurch gekennzeichnet,**
**dass** die Zugriffsinformation wie eine A-Rufnummer des mindestens einen Call's (5) übertragen wird.

4. Verfahren gemäß einem der voranstehenden Patentansprüche 1-3,
**dadurch gekennzeichnet,**
**dass** der virtuelle Call (11a,11b) Informationen zum Speicherort (8) der Multimedianachrichten (10,12), vorzugsweise eine Server-IP-Adresse, beinhaltet.

5. Verfahren gemäß einem der voranstehenden Patentansprüche 1-3,
**dadurch gekennzeichnet,**
**dass** der Speicherort (8) der Multimedianachrichten (10,12),vorzugsweise die Server-IP-Adresse an den Agentenplätzen (4.1 -4.n) vorkonfiguriert ist.

6. Verfahren gemäß dem voranstehenden Patentanspruch 4,
**dadurch gekennzeichnet,**
**dass** der mindestens eine virtuelle Call (11a,11b) eine ID (= identification) enthält, wobei die ID eine eindeutige Identifizierung der Multimedianachrichten (10,12) auf dem gewählten Server erlaubt.

7. Verfahren gemäß einem der voranstehenden Patentansprüche 1-6,
**dadurch gekennzeichnet,**
**dass** mindestens ein virtueller Call (11a,11b)Informationen zum Mediatyp, von in Multimedianachrichten (10,12) enthaltenen Daten (10.2, 10.3), enthält.

8. Verfahren gemäß einem der voranstehenden Patentansprüche 1-7,
**dadurch gekennzeichnet,**
**dass** mindestens ein virtueller Call (11a,11b)Informationen zum Mediatyp der Multimedianachricht (10,12) enthält.

9. Verfahren gemäß einem der voranstehenden Patentansprüche 1-8,
**dadurch gekennzeichnet,**
**dass** mindestens ein virtuellen Call (11a,11b) eine Absenderadresse, vorzugsweise dessen Server-IP-Adresse, der Multimedianachricht (10,12) enthält.

10. Verfahren gemäß einem der voranstehenden Patentansprüche 1-9,
**dadurch gekennzeichnet,**
**dass** mindestens ein virtueller Call (11a,11b) ein Unterscheidungsmerkmal zu den sonstigen Call's (5) enthält.

11. Verfahren gemäß dem voranstehenden Patentanspruch 10,
**dadurch gekennzeichnet,**
**dass** das Unterscheidungsmerkmal eine/die A-Rufnummer ist.

12. Verfahren gemäß einem der voranstehenden Patentansprüche 1-11,
**dadurch gekennzeichnet,**
**dass** die Multimedianachricht (10,12) im virtuellen Call (11a,11b) integriert wird.

13. Verfahren gemäß einem der voranstehenden Patentansprüche 1-12,
**dadurch gekennzeichnet,**
**dass** die Multimedianachrichten (10,12) auf einem zum Callcenter (1) gehörenden Speicher (8) hinterlegt werden.

14. Verfahren gemäß einem der voranstehenden Patentansprüche 1-13,
**dadurch gekennzeichnet,**
**dass** die Multimedianachrichten (10,12) auf einem nicht zum Callcenter (1) gehörenden Speicher hinterlegt werden.

15. Verfahren gemäß einem der voranstehenden Patentansprüche 1-14,
**dadurch gekennzeichnet,**
**dass** von einem Server, auf dem neue Multimedianachrichten (10,12) für das Callcenter (1) vorliegen, eine Benachrichtigung an das Callcenter (1) vorgenommen wird.

16. Verfahren gemäß einem der voranstehenden Patentansprüche 1-15,
**dadurch gekennzeichnet,**
**dass** vom Callcenter (1) regelmäßig Abfragen, bezüglich dem Vorliegen von an das Callcenter (1) gerichtete Multimedianachrichten (10,12), vorgenommen werden.

17. Verfahren gemäß einem der voranstehenden Patentansprüche 1-16,
**dadurch gekennzeichnet,**
**dass** bei einem Eingang eines virtuellen Call's (11a,11b) an einem Agentenplatz (4.1 - 4.n) automatisch die zugeordnete Multimedianachricht (10,12) durch diesen abgeholt wird.

18. Verfahren gemäß einem der voranstehenden Patentansprüche 1-17,
**dadurch gekennzeichnet,**
**dass** nach einem Eingang eines virtuellen Call's (11a,11b) an einen Agentenplatz (4.1-4.n) auf individuelle Anweisung des Agentenplatzoperators die Multimedianachricht (10,12) abgeholt wird.

19. Vorrichtung zur Erweiterung eines Callcenter's (1) mit einer Telekommunikationsanlage (2), welche eine ACD-Funktion (2.1) aufweist, mit Anbindung an ein öffentliches Telefonnetz (3) und Verbindung zu einer Vielzahl von Agentenplätze (4.1 - 4.n), wobei mindestens ein Agentenplatz (4.3) multimediafähig ausgestattet ist,
**dadurch gekennzeichnet,**
**dass** eine Erweiterungseinheit (7) vorgesehen ist, mit mindestens einer Anbindung an mindestens einen Datennetzverbund, mindestens einer Telefonverbindung zur Telekommunikationsanlage (2) und mit Mitteln zum Erzeugen von virtuellen Call's (11a,11b).

20. Vorrichtung gemäß dem voranstehenden Patentanspruch 19,
**dadurch gekennzeichnet,**
**dass** die Erweiterungseinheit (7) ein Server mit eigener IP-Adresse ist.

21. Vorrichtung gemäß einem der voranstehenden Patentansprüche 19 und 20,
**dadurch gekennzeichnet,**
**dass** der Datennetzverbund das Internet (9) ist.

22. Vorrichtung gemäß einem der voranstehenden Patentansprüche 19-21,
**dadurch gekennzeichnet,**
**dass** mindestens eine Telefonverbindung zur Telekommunikationsanlage (2) eine externe Verbindung ist.

23. Vorrichtung gemäß einem der voranstehenden Patentansprüche 19-22,
**dadurch gekennzeichnet,**
**dass** mindestens eine Telefonverbindung zur Telekommunikationsanlage (2) eine interne Verbindung ist.

24. Vorrichtung gemäß einem der voranstehenden Patentansprüche 19-23,
**dadurch gekennzeichnet,**
**dass** eine Verbindung (13) der Agentenplätze (4.1 - 4.n) zum Internet (9) vorgesehen ist.

25. Vorrichtung gemäß einem der voranstehenden Patentansprüche 19-24,
**dadurch gekennzeichnet,**
**dass** Mittel, vorzugsweise Programm-Mittel oder Programm-Module vorgesehen sind, die das Verfahren gemäß den Verfahrensansprüchen 1-18 durchführen.
